# EUROPÄISCHE PATENTSCHRIFT

(11) **EP 0 687 707 B1**
(45) Veröffentlichungstag und Bekanntmachung des Hinweises auf die Patenterteilung: **08.09.1999**
(21) Anmeldenummer: 95108595.0
(22) Anmeldetag: 06.06.1995
(51) Int. Cl.: C08K 5/375, C08L 21/00, C08C 19/08

(54) **Geformte, nicht verbackende Mastiziermittel**
Preformed, non-agglomerating masticating agent
Agent de mastication préformé, non-agglomérant

(30) Priorität: 17.06.1994 DE 4421265
(43) Veröffentlichungstag der Anmeldung: 20.12.1995
(73) Patentinhaber: BAYER AG, 51368 Leverkusen (DE)
(72) Erfinder: Buding, Hartmuth, Dr., D-52445 Titz (DE)

(56) Entgegenhaltungen:
- EP-A- 0 157 079
- DE-A- 2 820 978
- 'Rubber Handbook, 8th edition' 1990 , SWEDISH INSTITUTION OF RUBBER TECHNOLOGY , GÖTEBURG 177000 * Pepton 44 Prills * * Pepton 44T Prills * * Seite 186 *
- Römpp Chemie Lexikon, 9. Auflage, Seiten 4446-4447, Georg Thieme Verlag, Stuttgart, 1992, Herausgeber: Jürgen Falbe und Manfred Regnitz

## Beschreibung

Die Erfindung betrifft geformte, nicht staubende, nicht verbackende, rieselfähige Mastiziermittel auf Basis von 2,2'-Dibenzamidodiphenyldisulfid (DBD).

Mastiziermittel sind chemische Agenzien mit deren Hilfe die Viskosität von Naturkautschuk (NR) zeit- und energiesparend erniedrigt werden kann, im Vergleich zu der rein mechanischen Mastikation. Durch die Mastikation wird die Verarbeitbarkeit von wenig plastischem NR verbessert, d.h. die Füllstoff- und Chemikalienaufnahme wird erleichtert und das Verhalten beim Kalandrieren, Extrudieren und Spritzgießen wird positiv beeinflußt. Mastiziermittel wirken auch bei Synthese-Kautschuken viskositätserniedrigend, sofern diese in der Hauptkette Doppelbindungen enthalten, wie z.B. Polyisopren-Kautschuk, Polybutadien-Kautschuk oder Styrol-Butadien-Kautschuk. Die Mastikation kann auf einer Walze oder in einem Kneter durchgeführt werden (W. Hofmann, Kautschuk-Technologie, S. 419 und S. 429, Genter Verlag, Stuttgart, 1980).

Eine Vielzahl von Verbindungen, die mastizierend wirken, sind bekannt geworden. Industriell durchgesetzt haben sich jedoch nur Mastiziermittel auf Basis von Pentachlorthiophenol (PCTP) oder DBD.

Es ist bekannt, PCTP als Mastiziermittel in Form seines Zinksalzes einzusetzen. Weiterhin ist bekannt, PCTP als Formulierung mit Aktivatoren (metallorganische Komplexe) und inaktiven Füllstoffen (Verteilungsmittel), wie z.B. Kaolin, als Mastiziermittel einzusetzten in Form von Pulver, beöltem Pulver oder Wachsgranulat (M. Abele und Th. Kempermann, Kautschuk + Gummi Kunststoffe 42 (1989) 209).

In der FR-PS 1 580 550 sind Mastikationen mit Mischungen aus Zinksalzen von Fettsäuren und schwefelhaltigen, aromatischen Mastiziermitteln (z.B. DBD oder Zinksalz von PCTP) beschrieben. Analoge Mastiziermittel, die zusätzlich noch Eisenphthalocyanin enthalten, sind aus der DE-PS 2 820 978 bekannt.

DBD ist als Mastiziermittel in Form von Pulver ebenfalls bekannt (vgl. Pepton 22, ein Mastiziermittel der Fa. Anchor Chemical (UK) Ltd., Manchester M 11 4SR).

Weiterhin sind Mastiziermittel aus DBD, Eisenphthalocyanin und einem Verdünnungsmittel, wie z.B. verschiedene Tone, Diatomenerde, Calciumcarbonat, Kieselerde oder Wachse, beschrieben (DE-OS 2 440 092). Bevorzugtes Verdünnungsmittel ist wasserhaltiges Aluminiumsilikat. Es können aber auch Gemische der inerten, festen Verdünnungsmittel eingesetzt werden (vgl. Seite 6, Zeilen 10-16). Die verdünnungsmittelhaltigen Mastiziermittelgemische sind freifließende Pulver.

Kleine Viskositätserniedrigungen können auch durch Verarbeitungshilfen, wie z.B. Stearinsäure, erzielt werden. Für große Viskositätserniedrigungen muß NR dagegen mastiziert werden (W. Hofmann, Kautschuk-Technologie, S. 234, Genter Verlag, Stuttgart, 1980).

Allen Mastiziermitteln oder Mastiziermittelformulierungen in Form von Pulver ist gemeinsam, daß sie einerseits mehr oder weniger fließ- oder rieselfähig sind und andererseits beim Handhaben, wie z.B. Abwiegen, Dosieren und Verarbeiten, stark stauben. Dies ist aus arbeitshygienischer Sicht ein großer Nachteil. Beölte Pulver zeigen zwar eine verminderte Neigung zum Stauben; sie sind in der Tat jedoch nicht völlig staubfrei, wenn sie noch Fließfähigkeit aufweisen sollen.

Geformte, nicht staubende, nicht verbackende, rieselfähige Mastiziermittel auf der Basis von DBD werden zunehmend von der kautschukverarbeitenden Industrie aus Gründen der Arbeitshygiene als auch aus Gründen der Arbeitsrationalisierung im Hinblick auf eine automatische Dosierung des Mastiziermittels beim Mastikationsprozeß gefordert.

Geformte, unter Last nicht verklebende Mastiziermittel, hergestellt aus DBD, Tonerde, Prozeß-Öl, nicht-ionischem Emulgator und Wasser sind aus IP 067077 (18.04.83) bekannt. Nachteilig bei diesem Herstellverfahren ist, daß nach Granulation der wasserfeuchten Mischung das eingesetzte Wasser, gemäß Beispiel 20 Teile bezogen auf 100 Teile DBD, wieder verdampft werden muß. Dies stellt ein zeit- und kostenaufwendiger Arbeitsschritt dar. Eigene Versuche unter Zuhilfenahme der Lehre der DE-OS 2 440 092 (Seite 6, Zeilen 10-16) haben gezeigt, daß aus DBD, Kaolin, Eisenphthalocyanin und Wachs gering staubende, geformte Mastiziermittel erhalten werden können. Ebenfalls einfach können nicht staubende, geformte Mastiziermittel aus DBD und Wachs erhalten werden (vgl. Beispiel 1 bis 4 dieser Anmeldung). All diese Produkte haben jedoch den Nachteil, daß sie bei Lagerung unter Druck und erhöhter Temperatur verbacken, was eine automatische Dosierung der Produkte beim Mastikationsprozeß ausschließt.

Aufgabe der vorliegenden Erfindung war es geformte, nicht staubende DBD-haltige Mastiziermittel zur Verfügung zu stellen, die beim Lagern unter Druck und erhöhter Temperatur nicht verbacken und somit stets einwandfrei rieselfähig sind und die sich in dem zu mastizierenden Kautschuk schnell und einwandfrei auf üblichen Mischungsaggregaten der kautschukverarbeitenden Industrie (z. B. Walzen, Kneter) einarbeiten und verteilen lassen.

Gegenstand der Erfindung sind daher geformte, nicht staubende, nicht verklebende, rieselfähige Mastiziermittel gekennzeichnet durch einen Gehalt von 90 bis 10 Gew.-% an 2,2'-Dibenzamidodiphenyldisulfid (DBD), bevorzugt 80 bis 20 Gew.-%, insbesondere 75 bis 25 Gew.-%, und 10 bis 90 Gew.-%, bevorzugt 20 bis 80 Gew.-%, insbesondere 25 bis 75 Gew.% eines Gemisches an gesättigten Fettsäuren mit einer Iodzahl < 25, bevorzugt < 5, insbesondere < 2, einem Erstarrungspunkt im Bereich von 50° bis 68°C, bevorzugt im Bereich von 55° bis 63°C und einer Säurezahl von 179 bis 215, bevorzugt 195 bis 210, und gegebenenfalls 0,01 bis 5 Gew.-%, bevorzugt 0,05 bis 2 Gew.-%, an Aktivatoren, mengenmäßig zu Lasten von DBD gehend, und/oder gegebenenfalls 10 bis 70 Gew.-%, bevorzugt 20 bis 60 Gew.-% inerter Füllstoffe, mengenmäßig zu Lasten des Gemsiches an gesättigten Fettsäuren gehend, mit der Maßgabe, daß dann der Fettsäuregehalt nicht unter 10 Gew.-%, bevorzugt nicht unter 20 Gew.-% in der Mischung fallen darf.

Bevorzugte gesättigte Fettsäuren im Sinne der Erfindung sind Gemische aus gesättigten Fettsäuren mit einer Kohlenstoffzahl von 14 bis 22-C-Atomen wie sie bei der technischen Fettspaltung von Fetten und fetten Ölen anfallen, gebenenfalls mit einem geringeren Gehalt von ungesättigten Fettsäuren mit gerader Kohlenstoffzahl und maximal 3 Doppelbindungen pro Molekül, wie z.B. Palmitoleinsäure, Ölsäure oder Ricinolsäure, Linolsäure oder Linolensäure, charakterisiert durch eine Iodzahl von < 25, bevorzugt < 5, inbesondere < 2, einem Erstarrungspunkt im Bereich 50° bis 68°C, bevorzugt im Bereich von 55° bis 63°C und einer Säurezahl von 179 bis 215, bevorzugt 195 bis 210.

Neben den technischen Gemischen von gesättigten Fettsäuren können auch die reinen, gesättigten Fettsäuren mit gerader Kohlenstoffzahl und einer Kohlenstoffkettenlänge von C₁₄ bis C₂₂ eingesetzt werden oder Mischungen hieraus.

Als typische gesättigte Fettsäure zum Einsatz als Reinsubstanz oder im Gemisch seien genannt Myristinsäure, Palmitinsäure, Stearinsäure, Arachinsäure und Behensäure.

Aktivatoren im Sinne der Erfindung sind die bekannten Verbindungen Eisenphthalocyanin und Eisenhemiporphyrazin (DE-OS 2 440 092; Ullmann's Encyclopedia of Industrial Chemistry, 5. Aufl., S. 405, VCH Verlagsgesellschaft, Weinheim, 1993) oder Mischungen hieraus.

Inaktive Füllstoffe (Verdünnungsmittel) im Sinne der Erfindungen sind z.B. Kaolin, Calciumcarbonat, Diatomenerde, Kieselgur und Bariumsulfat, aber auch Gemische hieraus. Besonders bevorzugte inaktive Füllstoffe sind Kaolin und Calciumcarbonat.

Zur Formung des Mastiziermittels wird das DBD, gegebenenfalls inaktive Füllstoffe und gegebenenfalls die Aktivatoren jeweils als feine Pulver eingesetzt. Der mittlere Teilchendurchmesser dieser Stoffe beträgt < 200 µm, bevorzugt 0,01 bis 100 µm, insbesondere 0,1 bis 80 µm.

Die gesättigten Fettsäuren im Sinne der Erfindung werden vorzugsweise als feines Sprühgranulat eingesetzt. Vorzugsweise ist der mittlere Teilchendurchmesser dieses Granulats < 1000 µm, bevorzugt 10 bis 800 µm, insbesondere 50 bis 600 µm.

Ein bevorzugtes Verfahren für die Herstellung der geformten Mastiziermittel ist das diskontinuierliche Mischen der pulverförmigen Bestandteile in rotierenden Mischbehältern, wie z.B. Trommelmischern, gegebenenfalls auch mit eingebauten Mischwerkzeugen, wie z.B. Pflugscharmischern, Leitschraubenmischern oder Padellmischern, als auch Mischer mit schnell rotierenden Mischwerkzeugen. Es kommen aber auch kontinuierlich mischende Mischer in Frage.

Das pulverförmige Mastiziermittelgemisch wird dann einem kontinuierlichen Einwellenmischer (Extruder), bevorzugt einem kontinuierlichen Zweiwellenmischer (Doppelschneckenextruder) mit bevorzugt gleichsinnig laufenden Wellen zugeführt. Durch geeignete Temperaturführung im Extruder werden die gesättigten Fettsäuren im Sinne der Erfindung geschmolzen und die erhaltene Paste durch eine geeignete Lochplatte zwecks Ausbildung von Extrusionsgranulaten gepreßt.

Die gesättigten Fettsäuren im Sinne der Erfindung können aber auch in geschmolzener Form auf die zu bindenden pulverförmigen, homogen vermischten Stoffe an geeigneter Stelle in den Extruder gepumpt werden oder als feine Tröpfchen im Mischbehälter aufgesprüht werden.

Eine Paste, bestehend aus pulverförmigem DBD und geschmolzenen Fettsäuren und/oder pulverförmigen Aktivatoren, kann auch mit Hilfe einer Kühlwalze durch Aufstreichen oder Aufgießen zu Schuppen oder mit Hilfe eines Pastillierbandes zu Pastillen verarbeitet werden.

Die geformten Mastiziermittel lassen sich in den zu mastizerenden Kautschuk hervorragend einarbeiten und verteilen.

Das geformte Mastiziermittel wird je nach gewünschter Viskositätserniedrigung in Mengen von 0,01 bis 3 Gew.-Teilen, bevorzugt 0,05 bis 1 Gew.-Teilen, bezogen auf 100 Gew.-Teile Kautschuk, eingesetzt.

### Beispiel 1 (Vergleichsbeispiel)

Im Labor wurde eine Mischung aus 40,8 Gew.-% DBD-Pulver, 0.5 Gew.-% Eisenphthalocyanin-Pulver und 33,2 Gew.-% Kaolin-Pulver in einem 20 1-Trommelmischer der Fa. Lödige mit Pflugschareinbauten 10 min bei 150 upm gemischt. Sodann wurde die Pulvermischung in einem schnell-laufenden Labor-Mischer, bestückt mit messerförmigen Einbauten, mit geschmolzenem Paraffin (Erstarrungspunkt 66,5°C nach DIN ISO 2207, Viksosität 6,3 mm²/sec. bei 100°C nach DIN 51562, Nadelpenetration 12 in 0,1 mm bei 25°C nach 51579) besprüht und so gemischt, daß das DBD, das Kaolin und der Aktivator im Wachs eine homogene Verteilung aufweisen. Mit einem gleichsinnig laufenden Doppelwellenextruder mit Lochplatte wurden dann Extrusionsgranulate hergestellt. Der Durchmesser der Granulen betrug 3,5 mm, die Länge der Granulen zwischen ca. 5 und 8 mm.

### Beispiel 2 (Vergleichsbeispiel)

Man arbeitete wie in Beispiel 1, verwendete jedoch ein Paraffin mit einem Erstarrungspunkt von 71°C nach DIN ISO 2207, einer Viskosität von 13,5 mm²/sec bei 100°C nach DIN 51562 und einer Nadelpenetration von 26 in 0,1 mm bei 25°C nach DIN 51579.

### Beispiel 3 (Vergleichsbeispiel)

81,6 Gew.-% DBD-Pulver wurden in einem schnell-laufenden Labormischer, bestückt mit messerförmigen Einbauten, mit dem gleichen Paraffin, wie in Beispiel 1 beschrieben, besprüht und so gemischt, daß das DBD homogen im Wachs verteilt war Entsprechend Beispiel 1 wurden dann Extrusionsgranulate hergestellt.

### Beispiel 4 (Vergleichsbeispiel)

Man arbeitete wie in Beispiel 3, verwendete jedoch das in Beispiel 2 beschriebene Paraffin.

### Beispiel 5

40,8 Gew.-% DBD-Pulver, 33,2 Gew.-% Kaolin-Pulver, 0,5 Gew.-% Eisenphthalocyanin-Pulver und 25,5 Gew.-% Sprühgranulat eines gesättigten technischen Fettsäuregemisches mit einer Säurezahl von 205, einer Jodzahl von 0,6, einem Erstarrungspunkt von 59°C und einem mittleren Teilchendurchmesser von 380 µm (C₁₄: 2%, C₁₅: < 1%, C₁₆: 28%, C₁₇: 2%, C₁₈: 66%, > C₁₈: 2%) wurden in dem Trommelmischer aus Beispiel 1 gemischt. Sodann wurden Extrusionsgranulate gemäß Beispiel 1 hergestellt.

### Beispiel 6

Man arbeitete wie in Beispiel 5, setzte jedoch 71,4 Gew.-% DBD-Pulver und 28,6 Gew.-% des sprühgetrockneten gesättigten Fettsäuregemisches ein und granulierte.

### Beispiel 7

Das Verbackungsverhalten der nach Beispiel 1 bis 6 erhaltenen Extrusionsgranulate unter Druck und bei erhöhter Temperatur wurde wie folgt geprüft:

In ein senkrecht in einer Petrischale stehendes Glasrohr (Innendurchmesser 50,3 mm) wurden 50 g Extrusionsgranulat vorsichtig eingefüllt und mit einem Stempel (Außendurchmesser 47.0 mm) mit einem Druck von 0,1729 kg/cm² für 2,5 Tage bei 40°C Umgebungstemperatur belastet. Danach wurde die Petrischale entfernt und das Granulat gegebenenfalls aus dem Rohr gedrückt. Der Grad der Verbackung wurde wie folgt bewertet.
- Bewertung 0 :: Probe rieselt von selbst aus dem Glasrohr; keine Anbackung am Glas; keine Verbackungen einzelner Granulen
- Bewertung 1 :: Probe klebt am Glas und muß mit dem Stempel herausgedrückt werden; leichte Granulenverbackungen, die mit der Hand leicht gelöst werden können.
- Bewertung 2 :: Probe klebt am Glas und muß mit dem Stempel herausgedrückt werden; mittlere Granulenverbackungen.
- Bewertung 3 :: Probe klebt am Glas und muß mit dem Stempel herausgedrückt werden; starke Granulenverbackungen, Granulen lassen sich von einander nur unter teilweiser Zerstörung ablösen.

Die Versuchsergebnisse sind in Tabelle 1 zusammengestellt. Es ist klar ersichtlich, daß die erfindungsgemäßen Produkte gemäß Beispiel 5 und 6 nicht verbacken und somit den Produkten gemäß Beispiel 1 bis 4 nach Stand der Technik klar überlegen sind.

**Tabelle 1**

| | Vergleichsbeispiel Nr. | | | | erfindungsgemäßes Beispiel Nr. | |
|---|---|---|---|---|---|---|
| | 1 | 2 | 3 | 4 | 5 | 6 |
| Bewertung | 1-2 | 2 | 2-3 | 3 | 0 | 0 |

## Patentansprüche

1. Geformte, nicht staubende, nicht verklebende, rieselfähige Mastiziermittel, bestehend aus 90 bis 10 Gew.-% an 2,2'-Dibenzamidodiphenyldisulfid (DBD) und 10 bis 90 Gew.-% eines Gemisches an gesättigten Fettsäuren mit einer Iodzahl < 25, einem Erstarrungspunkt im Bereich von 50 °C bis 68 °C und einer Säurezahl von 179 bis 215 sowie gegebenenfalls 0,01 bis 5 Gew.-% an Aktivatoren, mengenmäßig zu Lasten von DBD gehend und/oder gegebenenfalls 10 bis 70 Gew.-% inerter Füllstoffe, mengenmäßig zu Lasten des Gemisches an gesättigten Fettsäuren gehend, mit der Maßgabe, daß dann der Fettsäuregehalt nicht unter 10 Gew.-% in der Mischung fallen darf.

2. Verwendung des Mastiziermittels gemäß Anspruch 1 zur Viskositätserniedrigung von Doppelbindungen enthaltenden Kautschuken, dadurch gekennzeichnet, daß man das Mastiziermittel in Mengen von 0,01 bis 3 Gewichtsteilen, bezogen auf 100 Gewichtsteile Kautschuk einsetzt.

## Claims

1. Shaped, non-dusting, non-sticking, pourable masticating agents consisting of 90 to 10 wt.% of 2,2'-dibenzoamidodiphenyl disulphide (DBD) and 10 to 90 wt.% of a mixture of saturated fatty acids having an iodine value of <25, a solidification point in the range from 50°C to 68°C and an acid value of 179 to 215, optionally together with 0.01 to 5 wt.% of activators, the quantity of which being set off against the DBD, and/or optionally 10 to 70 wt.% of inert fillers, the quantity of which being set off against the mixture of saturated fatty acids, with the proviso that in this case the fatty acid content must not fall below 10 wt.% in the mixture.

2. Use of the masticating agent according to claim to reduce the viscosity of rubbers containing double bonds, characterised in that the masticating agent is used in quantities of 0.01 to 3 parts by weight, relative to 100 parts by weight of rubber.

## Revendications

1. Agents de mastication préformés, ne formant pas de poussière, ne prenant pas en masse, s'écoulant bien, consistant en 90 à 10% en poids de disulfure de 2,2'-dibenzamidodiphényle (DBD) et 10 à 90 % en poids d'un mélange d'acides gras saturés ayant un indice d'iode inférieur à 25, un point de solidification dans l'intervalle de 50 à 68°C et un indice d'acide de 179 à 215, avec le cas échéant 0,01 à 5 % en poids d'activateurs, leurs proportions étant déduites de celles du DBD et/ou le cas échéant 10 à 70 % en poids de matières de charge inertes, leurs proportions étant déduites de celles du mélange d'acides gras saturés, sous réserve que la teneur en acides gras dans le mélange ne tombe pas au-dessous de 10 % en poids.

2. Utilisation de l'agent de mastication selon la revendication 1 en vue de diminuer la viscosité de caoutchoucs contenant des double liaisons, caractérisée en ce que l'agent de mastication est mis en oeuvre en quantité de 0,01 à 3 parties en poids pour 100 parties en poids du caoutchouc.
